# EUROPÄISCHE PATENTANMELDUNG

(11) **EP 3 050 736 A1**
(43) Veröffentlichungstag der Anmeldung: **03.08.2016**
(21) Anmeldenummer: 16152582.9
(22) Anmeldetag: 25.01.2016
(51) Int. Cl.: B60K 23/02, G05G 1/44, G05G 1/46

(54) **KUPPLUNGSPEDAL MIT EINSTELLBAREM ÜBERSETZUNGSVERHÄLTNIS**

(30) Priorität: 02.02.2015 DE 102015201718
(71) Anmelder: Schaeffler Technologies AG & Co. KG, 91074 Herzogenaurach (DE)
(72) Erfinder: Bohnen, Jens, 77756 Hausach (DE); Vogel, Florian, 77815 Bühl (DE)

(57) **Zusammenfassung**

Die Erfindung betrifft ein Kupplungspedal mit einstellbarem Übersetzungsverhältnis, wobei ein Kupplungspedal (2) mit einem Pedalbock (1) schwenkbar wirkverbunden ist und mit dem Kupplungspedal ein Kupplungsgeberzylinder (CMC) (3) betätigbar ist, welcher mit dem Kupplungspedal und Pedalbock verbunden ist, dadurch gekennzeichnet, dass Befestigungspunkte (P1, P2, P3) des Kupplungsgeberzylinders (3) an Pedalbock (1) und Kupplungspedal (2) variabel einstellbar angeordnet sind.

## Beschreibung

Die Erfindung betrifft ein Kupplungspedal mit einstellbarem Übersetzungsverhältnis, insbesondere ein Kupplungspedal mit Pedalbock, in welchem das Übersetzungsverhältnis eingestellt wird.

Das Pedalsystem eines PKW besteht üblicherweise aus einem Pedal, das am Pedalbock drehbar gelagert ist. Der Pedalbock ist an der Spritzwand zum Motorraum befestigt. Am Pedal ist die Kolbenstange des Kupplungsgeberzylinders (CMC) drehbar gelagert, das Gehäuse des CMC ist am Pedalbock fixiert. Aus den Abständen des Fußauflagepunkts am Pedal sowie der CMC-Kolbenstange zum Pedalaufhängepunkt am Pedalbock ergibt sich das Übersetzungsverhältnis des Pedalsystems. Pedalbock und Pedal werden üblicherweise als Kunststoff-Spritzgussteil ausgeführt. Die erforderlichen Bohrungen an den Lagerpunkten des CMC werden dabei so festgelegt, dass sich die gewünschte Pedalübersetzung ergibt. Eine Anpassung der Pedalübersetzung ist nur durch Neukonstruktion von Pedal und Pedalbock möglich und erfordert für beide Bauteile neue Werkzeuge.

Aus der Druckschrift DE 10 2005 050 760 A1 ist eine Betätigungseinrichtung für eine hydraulische Kupplungsanlage bekannt, insbesondere für Reibungskupplungen von Kraftfahrzeugen mit Unterstützung der Betätigungskraft. Bei Beibehaltung eines vorgegebenen Ausrückweges einer Kupplung und gleichzeitig vorgegebenem maximalem Pedalweg ist das Betätigungskraftmaximum absenkbar, indem die Kolbenstange eines Geberzylinders mit dem Pedal in mittelbarer formschlüssiger Wirkverbindung steht. Dafür wird eine Kulissenscheibe eingesetzt, die eine Führungsbahn aufweist, welche abhängig ihrer Position die Betätigungskraft absenkt. Die Betätigungskraft ist jedoch nur in Abhängigkeit der Führungsbahn in Stufen einstellbar, eine Feinjustierung ist demzufolge nicht möglich. Des Weiteren müssen in Abhängigkeit der gewünschten Betätigungskraft neue Kulissenscheiben hergestellt werden. Dies bedeutet einen hohen konstruktiven Aufwand und damit verbundene hohe Kosten.

Die Druckschrift DE 10 2006 031 012 A1 beschreibt eine Anordnung zur Kupplungsbetätigung, mit der einerseits unter Beibehaltung der Funktionen von Geberzylinder und Pedal, die Anzahl der Bauteile für die Anordnung zur Kupplungsbetätigung und damit das Gewicht und die Kosten reduziert werden. Andererseits ist die Anordnung unabhängig vom Fahrzeugtyp einsetzbar. Dazu ist in das Pedal das bewegbare Bauteil des Geberzylinders, der Kolben, und in den Pedalblock das feststehende Bauteil, das Gehäuse des Geberzylinders integriert bzw. jeweils mit diesem fest verbunden, und das bewegbare Bauteil wird mit einem Radius um den Drehpunkt des Pedals dreh- bzw. schwenkbar im feststehenden Bauteil geführt. Die hier beschriebene Anordnung lässt eine einfache bzw. kostengünstige Einstellung des Übersetzungsverhältnisses nicht zu.

In der Druckschrift WO 2007/104277 A1 ist eine Anordnung zur Druckbeaufschlagung eines hydraulischen Systems, insbesondere eines hydraulischen Systems zur Betätigung einer Kupplung in einem Antriebsstrang eines Kraftfahrzeugs bekannt, umfassend ein Betätigungsmittel, das mit einem hydraulischen Geberzylinder mechanisch verbunden ist, wobei der hydraulische Geberzylinder mindestens zwei Druckerzeugungseinheiten umfasst, die mit dem gleichen hydraulischen Ausgang der hydraulischen Druckerzeugungseinheit verbunden sind. Bei einer Betätigung des hydraulischen Geberzylinders wird ein hydraulischer Druck erzeugt bzw. es wird ein Hydraulikfluid aus dem Geberzylinder in ein nachgeordnetes hydraulisches System, in dem in der Regel ein Nehmerzylinder angeordnet ist, gedrückt. Auch in dieser Druckschrift ist das Übersetzungsverhältnis zwischen Kupplungsgeberzylinder und Kupplungspedal fest definiert und kann nicht individuell an die Bedürfnisse des Kunden angepasst werden

Aufgabe der Erfindung ist es, ein Kupplungspedal mit einstellbarem Übersetzungsverhältnis zu entwickeln, welches einen einfachen und kostengünstigen konstruktiven Aufbau aufweist und dabei ein individuell anpassbares Übersetzungsverhältnis des Kupplungspedals gewährleistet.

Diese Aufgabe wird mit den kennzeichnenden Merkmalen des ersten Schutzanspruchs gelöst.

Vorteilhafte Ausgestaltungen ergeben sich aus den Unteransprüchen.

Die Erfindung betrifft ein Kupplungspedal mit einstellbarem Übersetzungsverhältnis. Das Kupplungssystem besteht dabei aus einem Kupplungspedal, das mit einem Pedalbock schwenkbar wirkverbunden ist, wobei bei der Schwenkbewegung ein Kupplungsgeberzylinder (CMC) betätigbar ist. Der Kupplungsgeberzylinder ist mit dem Kupplungspedal und Pedalbock verbunden ist, wobei Befestigungspunkte des Kupplungsgeberzylinders an Pedalbock und Kupplungspedal variabel einstellbar angeordnet sind. Das bietet in Abhängigkeit der Position des Kupplungsgeberzylinders zum Kupplungspedal unterschiedliche Übersetzungsverhältnisse und damit eine Anpassung. Der Kupplungsgeberzylinder weist ein Gehäuse auf, welches vorzugsweise mittels Einstellstücken mit dem Pedalbock und Kupplungspedal verbunden sind derart,
- dass mindestens ein erstes Paar Einstellstücke an einem ersten Befestigungspunkt des CMC-Gehäuses und/oder
- zweites Paar Einstellstücke an einem zweiten Befestigungspunkt des CMC-Gehäuses und/oder
- ein drittes Paar Einstellstück an einem Befestigungspunkt von Kupplungsgeberzylinder und Kupplungspedal
das Übersetzungsverhältnis des Kupplungspedals definiert.

Die genaue Lage des Kupplungsgeberzylinders wird über in ihrer Position variable Bohrungen in den Einstellstücken definiert. Diese Einstellstücke verhindern montiert das Verschieben des Kupplungsgeberzylinders. Dabei sind die Einstellstücke formschlüssig mit Pedalbock und Kupplungspedal verbunden, wodurch ein Verdrehen verhindert wird. Die Einstellstücke werden sowohl links wie rechts des Kupplungspedals und Pedalbocks positioniert, wobei vorteilhafterweise die Einstellstücke alle dieselbe Form aufweisen sowie symmetrisch ausgebildet sind. Dadurch ist der Wechsel auch seitenübergreifend möglich, die Fertigung kann mittels eines zusätzlichen Werkzeuges erfolgen.

Die Sicherung der Einstellstücke erfolgt kraft- und/oder formschlüssig, wobei vorteilhafterweise die Einstellstücke mittels eines Clipsystems in dafür vorgesehene Langlöcher in Pedalbock und Kupplungspedal eingelegt und befestigt werden.

Eine alternative Möglichkeit besteht darin, den Kupplungsgeberzylinder mittels tragender Achsen, welche durch die Langlöcher geführt mit dazu korrespondierenden Bohrungen in Deckung gebracht werden, wobei mittels der Langlöcher der Kupplungsgeberzylinder innerhalb des Pedalblocks bzw. Kupplungspedals entlang der Langlöcher verschiebbar angeordnet ist und über die tragenden Achsen verspannt wird.

Die Erfindung wird nachfolgend an einem Ausführungsbeispiel und zugehörigen Zeichnungen näher erläutert.

Es zeigen:
- Figur 1: zeigt den Zusammenbau aus Pedalbock und Kupplungspedal,
- Figur 2: zeigt die Seitenansicht des Zusammenbaus,
- Figur 3: zeigt eine Form von Einstellstücke mit unterschiedlichem Bohrungsabstand
- Figur 4: Seitenansicht im Schnitt mit Langlöchern.

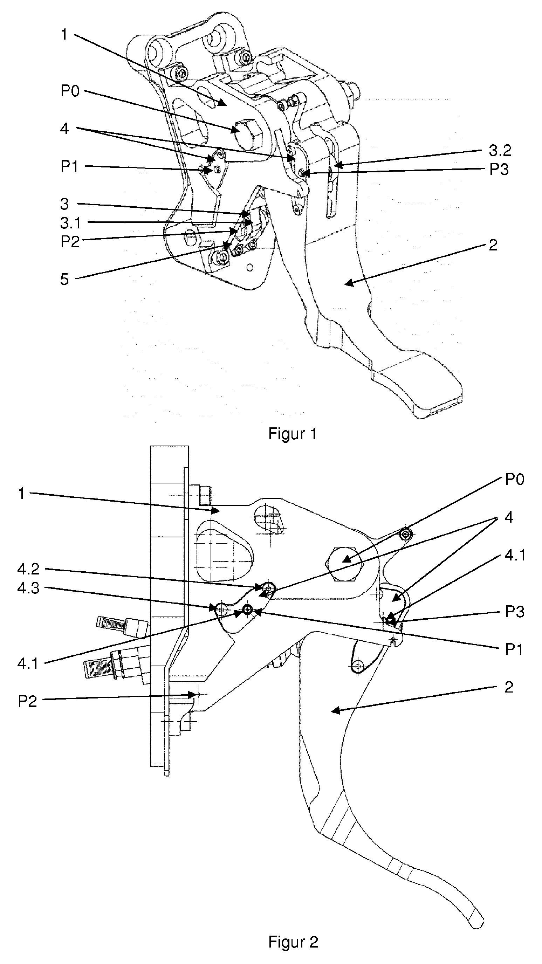

Die Erfindung besitzt gemäß Figur 1 einen Pedalbock 1 mit einem daran befestigten um einen Drehpunkt P0 schwenkbaren Kupplungspedal 2. Dabei betätigt das Kupplungspedal einen Kupplungsgeberzylinder 3, welcher mit seinem Gehäuse 3.1 mit dem Pedalbock 1 an einem ersten Befestigungspunkt P1 und einem zweiten Befestigungspunkt P2 mit dem Pedalbock verbunden ist. An dem gegenüberliegenden kolbenseitigen Ende 3.2 ist der Kupplungsgeberzylinder mit dem Kupplungspedal 2 in einem dritten Befestigungspunkt P3 verbunden. Die Änderung des Übersetzungsverhältnisses erfolgt über eine Verschiebung mindestens eines der drei Befestigungspunkte. Die Verschiebung erfolgt über Einstellstücke 4, welche eine längliche Form aufweisen und eine Befestigungsmöglichkeit des Kupplungsgeberzylinders 3 ermöglichen. Die Einstellstücke 4 weisen Bohrungen 4.1 auf, welche in Abhängigkeit der gewünschten Übersetzung in ihrer Lage auf dem Einstellstück 4 variieren sowie den Kupplungsgeberzylinder 3 gegen ungewolltes Verschieben sichern. Somit wird bei unterschiedlicher Position des Kupplungsgeberzylinders 3 das Übersetzungsverhältnis verändert und einstellbar. Die Einstellstücke sind paarweise links und rechts eines Befestigungspunktes vorgesehen. Gemäß dem Ausführungsbeispiel ist der Befestigungspunkt P2 als Träger 5 ausgeführt, wobei der Träger 5 in Abhängigkeit seiner Länge den Befestigungspunkt P2 des Kupplungsgeberzylinders 3 in seiner Lage zur Spritzwand des Motors, sowie zu den Befestigungspunkten P1 und P3 verändert. Jedoch ist für eine kostengünstige Herstellung die Verwendung nur einer Form von Einstellstücken 4 in allen Befestigungspunkten P1, P2, P3 möglich.

Gemäß Figur 1 und Figur 2 wurden am Pedalbock 1 und Kupplungspedal 2 Einstellstücke 4 montiert. Die Einstellstücke weisen dabei drei Bohrungen 4.1, 4.2, 4.3 auf, wobei die Bohrung 4.1 die Position des Kupplungsgeberzylinders 3 in den Befestigungspunkten P1 und P3 angibt. Die Bohrungen 4.2 und 4.3 dienen der Verschraubung der Einstellstücke an Pedalbock 1 und Kupplungspedal 2. Da der Pedalbock und das Kupplungspedal eine Aussparung aufweisen, welche die Kontur der Einstellstücke besitzt, ist eine Montage mittels Clips ebenfalls möglich.

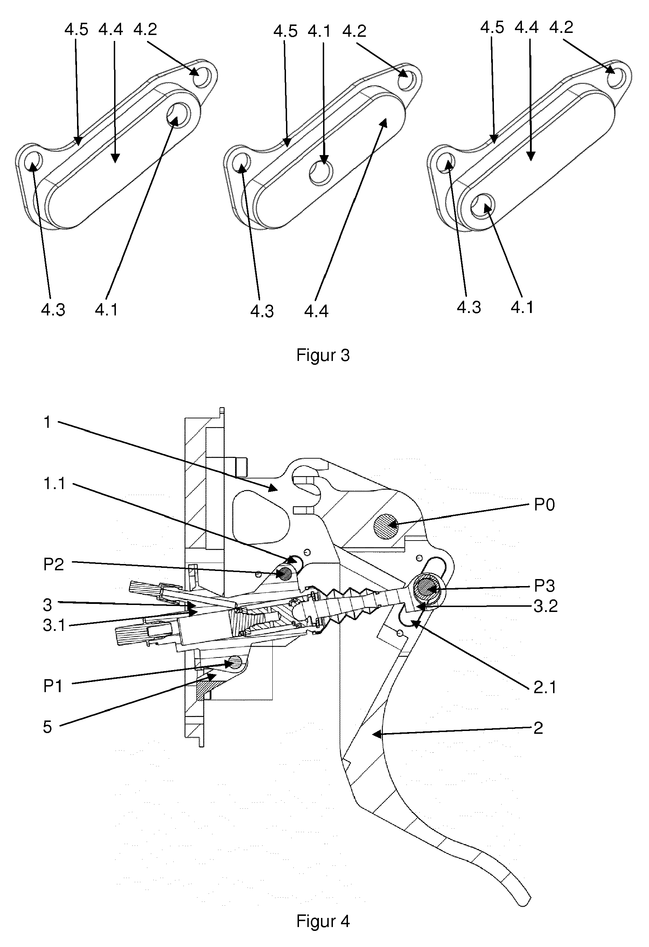

Verschraubbare Einstellstücke sind in drei Varianten für eine erste Seite in Figur 3 dargestellt. Die Einstellstücke 4 weisen dabei im Vergleich zueinander die Bohrung 4.1 für einen Befestigungspunkt P1, P2 oder P3 in unterschiedlichen Positionen auf. In einer Variante können die Einstellstücke vorteilhafterweise auch mehrere Bohrungen des Typs 4.1 aufweisen, sodass mit einem Einstellstück mehrere Übersetzungsverhältnisse realisiert werden können. Des Weiteren weisen die Einstellstücke eine Grundplatte 4.4 mit Bohrungen 4.2, 4.3 auf, welche der Befestigung dienen. Die Grundplatte weist eine Erhebung in Form einer Passfeder 4.5 auf, welche in eine korrespondierende Nut in Form eines Langloches im Pedalbock 1 und/oder Kupplungspedal 2 und/oder Kupplungsgeberzylinder 3 eingelegt werden kann. Die Einstellstücke sind nicht auf die in Figur 3 dargestellte Form beschränkt. Das Einstellstück ist vorzugsweise einteilig ausgeführt.

Die in Figur 4 dargestellte Schnittdarstellung zeigt die für das Einsetzen der Einstellstücke 4 vorgesehenen Langlöcher 1.1, 2.1 im Pedalbock 1 und Kupplungspedal 2. Entlang dieser Langlöcher 1.1, 2.1 kann entsprecht dem gewünschten Übersetzungsverhältnis der Befestigungspunkt P1 und P3 verschoben werden, wobei in gewünschter Position die Bohrungen 4.1 der Befestigungsstücke 4 entsprechend vorhanden sind.

Der Pedalbock 1 ist vorzugsweise einteilig als Spritzgussteil ausgeführt. Alternativ ist eine zweiteilige Ausführung gemäß Ausführungsbeispiel denkbar.

### Bezugszeichenliste

- 1: Pedalbock
- 1.1: Langloch
- 2: Kupplungspedal
- 2.1: Langloch
- 3: Kupplungsgeberzylinder
- 3.1: Gehäuse
- 3.2: Kolbenseitiges Ende
- 4: Einstellstück
- 4.1: Bohrung
- 4.2: Bohrung
- 4.3: Bohrung
- 4.4: Grundplatte
- 4.5: Erhebung
- 5: Träger
- P0: Drehpunkt Kupplungspedal
- P1: erster Befestigungspunkt Gehäuse - Pedalbock
- P2: zweiter Befestigungspunkt Gehäuse - Pedalbock
- P3: dritter Befestigungspunkt Kolbenstange - Kupplungspedal

## Patentansprüche

1. Kupplungspedal mit einstellbarem Übersetzungsverhältnis, wobei ein Kupplungspedal (2) mit einem Pedalbock (1) schwenkbar wirkverbunden ist und mit dem Kupplungspedal (2) ein Kupplungsgeberzylinder (CMC) (3) betätigbar ist, welcher mit dem Kupplungspedal (2) und Pedalbock (1) verbunden ist, **dadurch gekennzeichnet, dass** Befestigungspunkte (P1, P2, P3) zwischen Kupplungsgeberzylinder (3), Pedalbock (1) und Kupplungspedal (2) variabel einstellbar angeordnet sind.

2. Kupplungspedal nach Anspruch 1, wobei der Kupplungsgeberzylinder (3) ein Gehäuse (3.1) aufweist, **dadurch gekennzeichnet, dass** das Gehäuse (3.1) des Kupplungsgeberzylinders (3) sowie der Kupplungsgeberzylinder (3) mittels Einstellstücken (4) mit dem Pedalbock (1) und Kupplungspedal (2) verbunden sind derart,
- dass mindestens ein erstes Paar Einstellstücke (4) an einem ersten Befestigungspunkt (P1) des CMC-Gehäuses (3.1) und/oder
- zweites Paar Einstellstücke (4) an einem zweiten Befestigungspunkt (P2) des CMC-Gehäuses (3.1) und/oder
- ein drittes Paar Einstellstück (4) an einem dritten Befestigungspunkt (P3) von Kupplungsgeberzylinder (3) und Kupplungspedal (2)
das Übersetzungsverhältnis des Kupplungspedals (2) definiert.

3. Kupplungspedal nach Anspruch 1 und 2, **dadurch gekennzeichnet, dass** die Einstellstücke (4) Bohrungen (4.1) aufweisen, welche abhängig des Übersetzungsverhältnisses in ihrer Position zum Pedalbock (1) und/oder Kupplungspedal (2) variieren.

4. Kupplungspedal nach Anspruch 1 bis 3, **dadurch gekennzeichnet, dass** die Einstellstücke (4) eine Kontur aufweisen, welche einem Verdrehen im Pedalbock (1) und Kupplungspedal (2) entgegenwirken.

5. Kupplungspedal nach einem der Ansprüche 1 bis 4, **dadurch gekennzeichnet, dass** die Paare der Einstellstücke (4) aus einer linken und rechten Seite bestehen.

6. Kupplungspedal nach Anspruch 5, **dadurch gekennzeichnet, dass** die Einstellstücke (4) dieselbe Kontur aufweisen sowie symmetrisch ausgeführt sind derart, dass sie untereinander austauschbar sind.

7. Kupplungspedal nach einem der Ansprüche 1 bis 6, **dadurch gekennzeichnet, dass** die Einstellstücke (4) kraftschlüssig und/oder formschlüssig mit dem Pedalbock (1) bzw. Kupplungspedal (2) verbunden sind.

8. Kupplungspedal nach Anspruch 7, **dadurch gekennzeichnet, dass** die Einstellstücke (4) mittels Clip mit in dafür vorgesehenen Langlöchern im Pedalbock (1.1) bzw. Kupplungspedal (2.1) fixiert sind.

9. Kupplungspedal nach Anspruch 1, wobei der Kupplungsgeberzylinder (3) ein Gehäuse (3.1) aufweist, **dadurch gekennzeichnet, dass** das Gehäuse (3.1) des Kupplungsgeberzylinders (3) und/oder der Pedalblock (1) und/oder das Kupplungspedal (2) Langlöcher aufweist, die mit korrespondierenden Bohrungen des zu verbindenden Bauteils (1, 2, 3) in Deckung gebracht werden, mittels derer der Kupplungsgeberzylinder (3) innerhalb des Pedalblocks (1) bzw. Kupplungspedals (2) entlang der Langlöcher verschiebbar angeordnet ist.

10. Kupplungspedal nach Anspruch 9, **dadurch gekennzeichnet, dass** der Kupplungsgeberzylinder (3) mittels tragender Achsen, welche in den Langlöchern (1.1, 2.1) verschiebbar angeordnet sind, durch kraftschlüssige Verbindungen, vorzugsweise Verschraubung befestigt wird.
